# EUROPEAN PATENT APPLICATION

(11) **EP 4 790 468 A1**
(43) Date of publication of application: **12.08.2026**
(21) Application number: 24874909.5
(22) Date of filing: 26.09.2024
(51) Int. Cl.: G02B 7/09, G02B 7/02, G03B 3/10, G03B 17/12

(54) **LENS DRIVING DEVICE, CAMERA DEVICE, AND OPTICAL DEVICE**

(30) Priority: 04.10.2023 KR 20230132116; 23.09.2024 KR 20240128366
(71) Applicant: LG Innotek Co., Ltd., Seoul 07796 (KR)
(72) Inventor: HAN, Min Seok, Seoul 07796 (KR); PARK, Tae Bong, Seoul 07796 (KR); SEOL, Dong Hyeon, Seoul 07796 (KR)
(74) Representative: DREISS Patentanwälte PartG mbB
(86) International application number: PCT/KR2024/014670
(87) International publication number: WO 2025/075352

(57) **Abstract**

The present embodiment relates to a lens driving device comprising: a housing; a lens holder disposed on the housing; a magnet disposed on the lens holder; a coil interacting with the magnet; a ball disposed between the housing and the lens holder; and a yoke disposed on the housing and having an attractive force interacting with the magnet, wherein the shortest distance between the yoke and the optical axis is shorter than the shortest distance between the magnet and the optical axis.

## Description

### [Technical Field]

The present embodiment relates to a lens driving device, a camera device, and an optical device.

### [Background Art]

Recent smartphones are equipped with cameras function capable of capturing high-resolution photos and videos.

In particular, recent smartphone cameras feature an autofocus function that automatically adjusts the focus based on the distance from the subject. This autofocus function can be performed by moving the lens relative to the image sensor in an optical axis direction. Accordingly, the lens driving device may comprise a ball that guides the movement of the moving part on which the lens is disposed. At this time, the attractive force between a magnet and a yoke can be used to hold the ball between the fixed part and the moving part.

However, this can lead to the lens rolling due to the moment generated by the ball.

(Patent Document 1) KR 10-2015-0118005 A

### [Disclosure]

### [Technical Problem]

The present embodiment seeks to provide a lens driving device that minimizes the moment generated by a ball. In other words, the present embodiment seeks to provide a lens driving device that minimizes lens rolling, that is, rotation.

Furthermore, the present embodiment seeks to provide a lens driving device that minimizes drive current consumption by preventing preload from being applied to the moving part.

Alternatively, a modified example seeks to provide a lens driving device that minimizes impact noise by applying preload to the moving part.

### [Technical Solution]

According to the present embodiment, a lens driving device comprises a housing; a lens holder disposed on the housing; a magnet disposed on the lens holder; a coil interacting with the magnet; a ball disposed between the housing and the lens holder; and a yoke disposed on the housing and having an attractive force with the magnet, in which the shortest distance between the yoke and the optical axis may be shorter than the shortest distance between the magnet and the optical axis.

The lens holder may press the ball toward the housing by the attractive force between the magnet and the yoke.

The magnet may comprise an outer lateral surface facing the coil and an inner lateral surface opposite the outer lateral surface, and the shortest distance between the ball and the inner lateral surface of the magnet may be shorter than the shortest distance between the ball and the outer lateral surface of the magnet.

The shortest distance between the ball and the yoke may be shorter than the shortest distance between the ball and the magnet.

The magnet may comprise an outer lateral surface facing the coil, and the ball may overlap the yoke in a first direction that is perpendicular to the optical axis and parallel to the outer lateral surface of the magnet.

The magnet may comprise a first portion that overlaps the ball in the first direction and a second portion that does not overlap the ball in the first direction.

The magnet may comprise an outer lateral surface facing the coil, and the ball may overlap the coil in a second direction that is perpendicular to the optical axis and perpendicular to the outer lateral surface of the magnet.

The magnet may be disposed between the yoke and the coil in a direction perpendicular to the optical axis.

The magnet and the coil may move the lens holder in the optical axis direction, and the ball may comprise a plurality of balls overlapping each other in the optical axis direction.

The lens holder may comprise a first side wall, and the lens holder may comprise a first groove formed recessed in an outer surface of the first side wall and in which the magnet is disposed, and a second groove formed recessed in an inner surface of the first side wall and in which the ball is disposed.

The yoke comprises a first yoke and a second yoke spaced apart from each other, and each of the first yoke and the second yoke comprises a first portion and a second portion protruding inwardly from the first portion, and the length of the first portion may be longer than the length of the second portion in the optical axis direction.

The yoke may be in the shape of a square plate disposed parallel to the optical axis.

The yoke comprises a first portion and a second portion disposed long in the optical axis direction, and a third portion connecting a lower end portion of the first portion and a lower end portion of the second portion, and an upper end portion of the first portion and an upper end portion of the second portion may not be connected to each other.

A camera device according to the present embodiment may comprise a printed circuit board; an image sensor disposed on the printed circuit board; the lens driving device disposed on the printed circuit board; and a lens coupled to the lens driving device.

An optical device according to the present embodiment may comprise a main body; the camera device disposed on the main body; and a display disposed on the main body and outputting one or more of the images and videos captured by the camera device.

### [Advantageous Effect]

This embodiment can minimize the moment generated by the ball. This minimizes lens rolling, that is, rotation.

Furthermore, this embodiment eliminates the need for preloading the moving part, thereby minimizing drive current consumption.

Alternatively, a variation can be made where preloading is applied to the moving part, minimizing impact noise.

### [Description of Drawings]

FIG. 1 is a perspective view illustrating a lens driving device according to the present embodiment.
FIG. 2 is a cross-sectional view taken along line A-A of FIG. 1.
FIG. 3 is an enlarged view illustrating area B of FIG. 2.
FIG. 4 is a cross-sectional view illustrating the lens driving device according to the present embodiment, taken from above and cut perpendicular to the optical axis.
FIG. 5 is an exploded perspective view illustrating the lens driving device according to the present embodiment.
FIG. 6 is a perspective view illustrating the lens driving device according to the present embodiment with the cover member omitted.
FIG. 7 is a perspective view illustrating the housing and related components of the lens driving device according to the present embodiment.
FIG. 8 is a cross-sectional view illustrating a ball and a yoke disposed in the housing of the lens driving device according to the present embodiment.
FIG. 9 is an exploded perspective view illustrating the housing and substrate of the lens driving device according to the present embodiment.
FIG. 10 is a perspective view illustrating the lens holder and related components of the lens driving device according to the present embodiment.
FIG. 11 is a bottom perspective view illustrating the lens holder and related components of the lens driving device according to the present embodiment, viewed from a different direction than FIG. 10.
FIG. 12 (a) is a cross-sectional view illustrating the initial state of the lens driving device according to the present embodiment, in which no current is applied to the coil, and (b) is a perspective view illustrating the disposition structure of the drive part and the yoke.
FIG. 13 (a) is a cross-sectional view illustrating the initial state of the lens driving device according to the first modified example, in which no current is applied to the coil, and (b) is a perspective view illustrating the disposition structure of the drive part and the yoke.
FIG. 14 (a) is a cross-sectional view illustrating the initial state of the lens driving device according to the second modified example, in which no current is applied to the coil, and (b) is a perspective view illustrating the disposition structure of the drive part and the yoke.
FIG. 15 is a cross-sectional view illustrating the disposition of the ball and the yoke in the housing of the lens driving device according to the second modified example.
FIG. 16 is an exploded perspective view illustrating a camera device according to the present embodiment.
FIG. 17 is a perspective view illustrating an optical device according to the present embodiment.

### [Best Mode]

Hereinafter, preferred embodiments of the present disclosure will be described in detail with reference to the attached drawings.

However, the technical idea of the present disclosure is not limited to some of the embodiments described, but can be implemented in various different forms, and within the scope of the technical idea of the present disclosure, one or more of the components between the embodiments can be selectively combined or substituted and used.

In addition, terms (comprising technical and scientific terms) used in the present embodiment can be interpreted as meanings that can be generally understood by a person having ordinary knowledge in the technical field to which the first embodiment belongs, unless explicitly and specifically defined and described, and terms that are commonly used, such as terms defined in a dictionary, can be interpreted in consideration of the contextual meaning of the related technology.

In addition, terms used in the present embodiment are used to describe the embodiments and are not intended to limit the present disclosure.

In this specification, the singular may also comprise the plural unless specifically stated otherwise in the phrase, and when it is described as "at least one (or one or more) of A, B, C", it may comprise one or more of all combinations that can be combined with A, B, C.

In addition, in describing components of the first embodiment, terms such as first, second, A, B, (A), (B), or the like may be used. These terms are only intended to distinguish the components from other components, and are not intended to limit the nature, order, or sequence of the components.

In addition, when a component is described as being 'connected', 'coupled', or 'accessed' to another component, it may comprise not only cases where the component is 'connected', 'coupled', or 'accessed' directly to the other component, but also cases where the component is 'connected', 'coupled', or 'accessed' by another component between the component and the other component.

In addition, when described as being formed or disposed "on" or "below" each component, "on" or "below" comprises not only the case where the two components are in direct contact with each other, but also the case where one or more other components are formed or disposed between the two components. In addition, when expressed as "on" or "below", the meaning of the downward direction as well as the upward direction based on one component may be comprised.

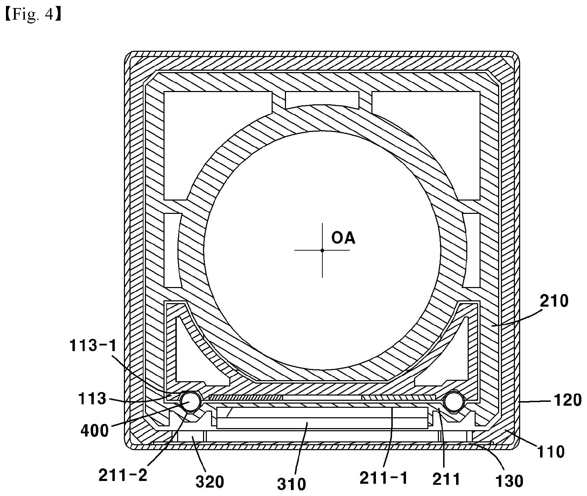

The "optical axis direction" used below is defined as the optical axis direction (see OA in FIG. 4) of the lens and/or image sensor coupled to the lens driving device.

The "vertical direction" used below may be parallel to or the same direction as the optical axis direction. The vertical direction may correspond to the "z-axis direction." The "horizontal direction" used below may be a direction perpendicular to the vertical direction. In other words, the horizontal direction may be a direction perpendicular to the optical axis. Therefore, the horizontal direction may comprise the "x-axis direction" and the "y-axis direction."

The "auto focus (AF) function" used below is defined as a function that automatically focuses on a subject by adjusting the distance from the image sensor by moving the lens in the optical axis direction according to the distance of the subject so that a clear video of the subject can be obtained on the image sensor. In addition, "closed-loop auto focus (CLAF) control" is defined as a function that detects the distance between the image sensor and the lens and provides feedback control of the position of the lens in real time to improve the accuracy of focus adjustment.

Hereinafter, one of the "x-axis direction" and the "y-axis direction" may be referred to as the "first direction" and the other may be referred to as the "second direction".

Hereinafter, the configuration of the lens driving device according to the present embodiment is described with reference to the drawings.

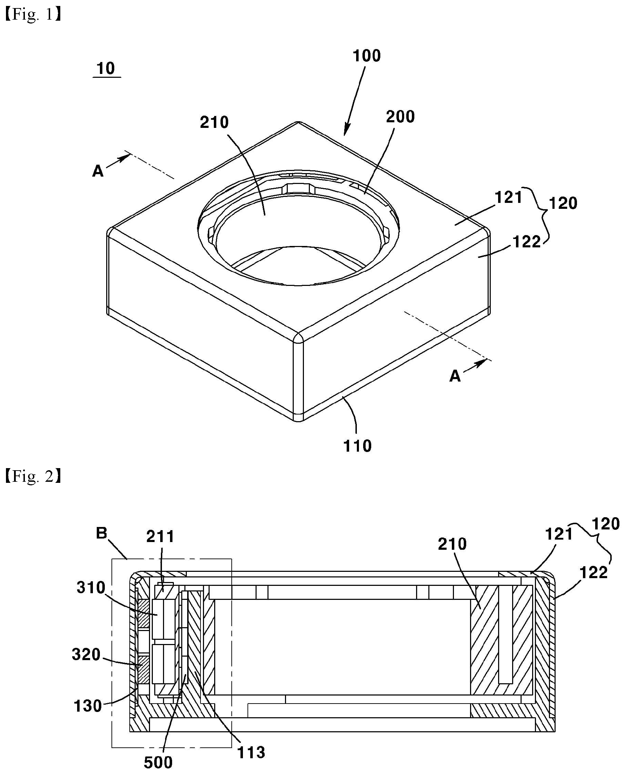

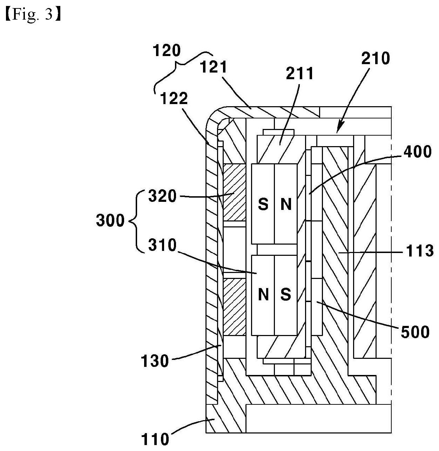

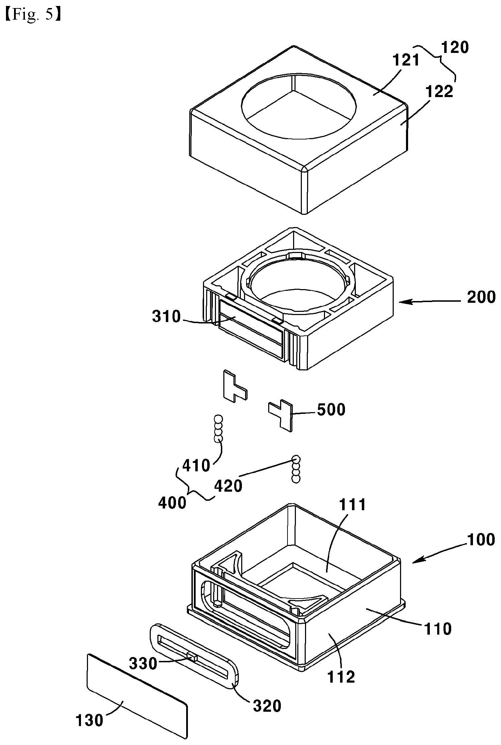

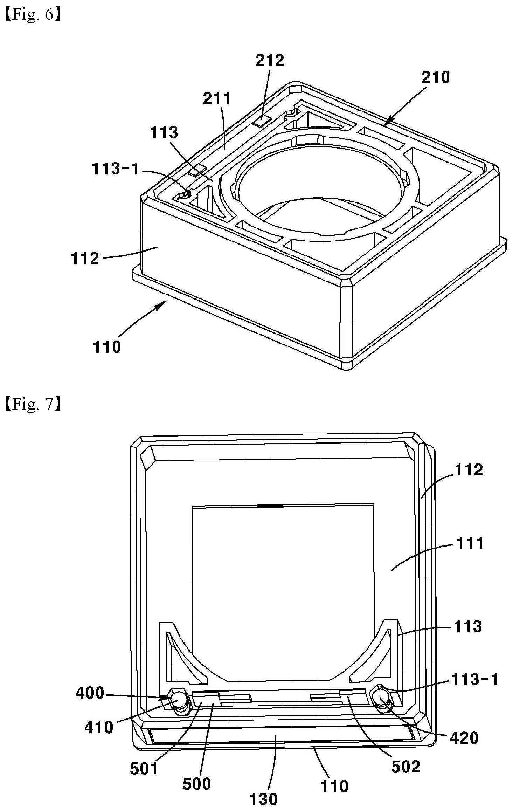

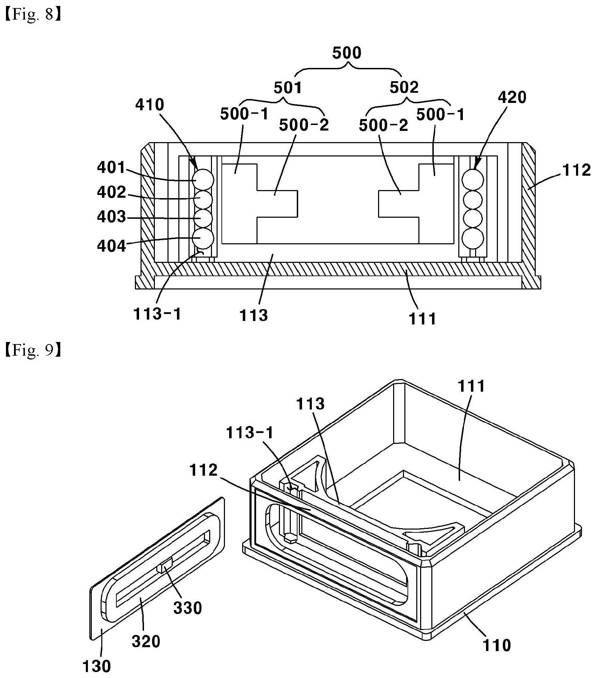

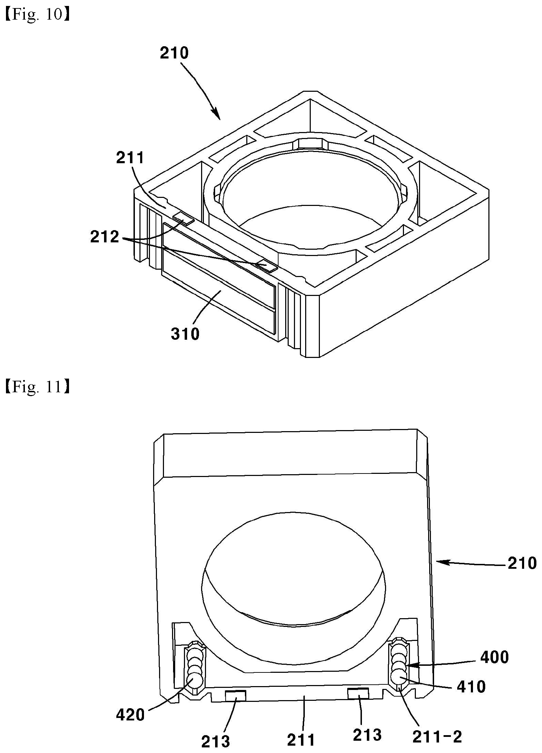

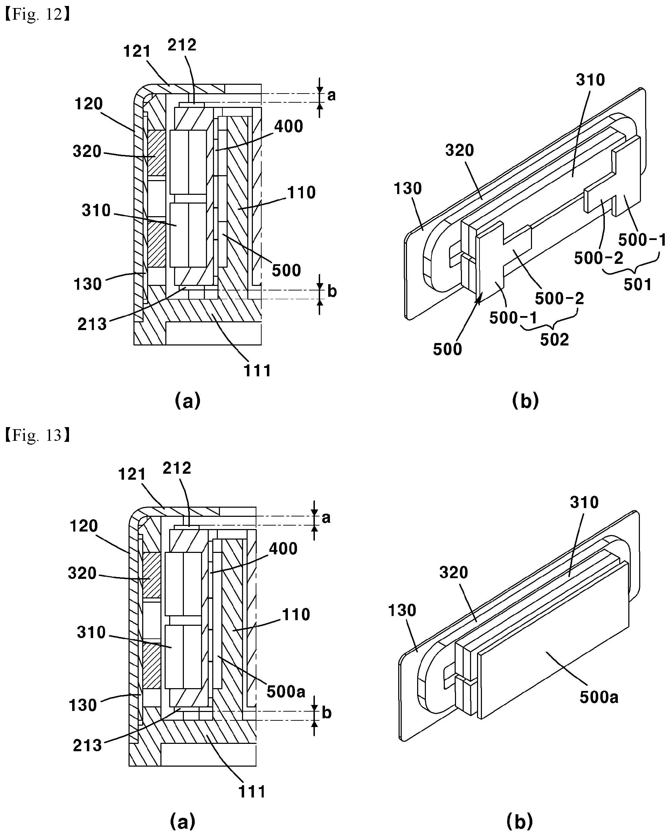

FIG. 1 is a perspective view illustrating a lens driving device according to the present embodiment. FIG. 2 is a cross-sectional view taken along line A-A of FIG. 1. FIG. 3 is an enlarged view illustrating area B of FIG. 2. FIG. 4 is a cross-sectional view illustrating the lens driving device according to the present embodiment, taken from above and cut perpendicular to the optical axis. FIG. 5 is an exploded perspective view illustrating the lens driving device according to the present embodiment. FIG. 6 is a perspective view illustrating the lens driving device according to the present embodiment with the cover member omitted. FIG. 7 is a perspective view illustrating the housing and related components of the lens driving device according to the present embodiment. FIG. 8 is a cross-sectional view illustrating a ball and a yoke disposed in the housing of the lens driving device according to the present embodiment. FIG. 9 is an exploded perspective view illustrating the housing and substrate of the lens driving device according to the present embodiment. FIG. 10 is a perspective view illustrating the lens holder and related components of the lens driving device according to the present embodiment. FIG. 11 is a bottom perspective view illustrating the lens holder and related components of the lens driving device according to the present embodiment, viewed from a different direction than FIG. 10. FIG. 12 (a) is a cross-sectional view illustrating the initial state of the lens driving device according to the present embodiment, in which no current is applied to the coil, and (b) is a perspective view illustrating the disposition structure of the drive part and the yoke.

The lens driving device 10 of the present embodiment may comprise an AF structure in which the AF moving part 200 and the fixed part 100 are brought into close contact by the attractive force between the yoke 500 and the magnet 310 and a plurality of balls 400 are positioned therebetween. A lens holder 210 may be positioned inside the AF driving part 300. The lens holder 210 may be driven in the optical axis direction by the driving magnet 310 and the coil 320 facing the driving magnet, thereby performing a focusing function.

The lens driving device 10 may comprise a fixed part 100. The fixed part 100 may be a relatively fixed part when the moving part 200 moves. The fixed part 100 may be a fixed part when autofocus is driven. The fixed part 100 may correspond to the image sensor 60 side, and the moving part 200 may correspond to the lens side.

The lens driving device 10 may comprise a housing 110. The fixed part 100 may comprise the housing 110. The housing 110 may be a base. The housing 110 may accommodate a lens holder 210 therein. The housing 110 may be disposed on the outside of the lens holder 210. The housing 110 may be disposed below the lens holder 210. The housing 110 may be coupled to a cover member 120. The housing 110 may be disposed within the cover member 120. The housing 110 may be disposed below the cover member 120.

The housing 110 may comprise a stepped part. The stepped part may be formed at the lower end portion of the outer surface of the housing 110. The stepped part may be formed by protruding from the lower end portion of the outer surface of the housing 110. A side plate 122 of the cover member 120 may be disposed at the stepped part.

The housing 110 may comprise a lower plate 111. The lower plate 111 may be disposed perpendicular to the optical axis. The housing 110 may comprise a side wall 112. The side wall 112 may be formed at the outer edge of the lower plate 111. The side wall 112 may be disposed parallel to the optical axis. The side wall 112 may comprise a plurality of side walls. The side wall 112 may comprise four side walls. The side wall 112 may comprise a first side wall and a second side wall disposed opposite each other, and a third side wall and a fourth side wall disposed opposite each other.

The housing 110 may comprise a support part 113. The support part 113 may be formed to protrude upward from the lower plate 111. The support part 113 may be disposed within the side wall 112. The support part 113 may be disposed parallel to the optical axis. A yoke 500 may be disposed on the support part 113. A ball 400 may be disposed on the support part 113. The support part 113 may be inserted into a lens holder 210. The support part 113 may be disposed in a hole penetrating the lens holder 210 in the optical axis direction.

The housing 110 may comprise a groove 113-1. The groove 113-1 may be a ball rail. A ball 400 may be disposed on the groove 113-1. The groove 113-1 may be disposed in the optical axis direction. The groove 113-1 may extend in the optical axis direction. A ball 400 may come into contact with the groove 113-1. The ball 400 may move along the groove 113-1.

The lens driving device 10 may comprise a cover member 120. The fixed part 100 may comprise the cover member 120. The cover member 120 may be a cover. The cover member 120 may be a cover can. The cover member 120 may be disposed in the housing 110. The cover member 120 may be disposed on the housing 110. The cover member 120 may be fixed to the housing 110. The cover member 120 may be coupled to the housing 110. The cover member 120 may be bonded to the housing 110 with an adhesive. The cover member 120 may accommodate at least a portion of the housing 110 therein. The cover member 120 may be a shield can. The cover member 120 may be formed of metal.

The cover member 120 may comprise a top plate 121. The top plate 121 may comprise a hole through which light passes. The top plate 121 may comprise a hole formed at a position corresponding to a lens. The cover member 120 may comprise a side plate 122. The side plate 122 may extend from the top plate 121. The side plate 122 may extend downward from an outer edge of the top plate 121. The side plate 122 may be formed in a bent shape from the top plate 121.

The side plate 122 of the cover member 120 may comprise a plurality of side plates. The side plate 122 may comprise a first side plate and a second side plate that are disposed opposite each other, and a third side plate and a fourth side plate that are disposed opposite each other.

The lens driving device 10 may comprise a substrate 130. The fixed part 100 may comprise the substrate 130. The substrate 130 may be disposed in the housing 110. The substrate 130 may be positioned on the housing 110. The substrate 130 may be fixed to the housing 110. The substrate 130 may be coupled to the housing 110. The substrate 130 may be adhered to the housing 110. The substrate 130 may be disposed on the side plate 122 of the cover member 120. The substrate 130 may be disposed on the side plate 122 of the cover member 120. The substrate 130 may be fixed to the side plate 122 of the cover member 120. The substrate 130 may be coupled to the side plate 122 of the cover member 120. The substrate 130 may be adhered to the side plate 122 of the cover member 120. The substrate 130 may be a flexible printed circuit board (FPCB). The substrate 130 may supply power to the coil 320. The substrate 130 may supply power to the sensor 330. The substrate 130 may be disposed parallel to the optical axis.

The substrate 130 may comprise a terminal. The terminal may be disposed on the outer surface of the substrate 130. The terminal may be formed on the lower end of the substrate 130. The terminal may comprise a plurality of terminals. The terminal may be coupled to a terminal of a printed circuit board 50. The terminal may comprise a terminal electrically connected to a sensor 330. The terminal may comprise a terminal electrically connected to a coil 320.

The lens driving device 10 may comprise a moving part 200. The moving part 200 may be a part that moves relative to the fixed part 100. The moving part 200 may be moved by the driving part 300. The moving part 200 may be disposed to be movable relative to the fixed part 100. The moving part 200 may move relative to the fixed part 100 during autofocus operation.

The lens driving device 10 may comprise a lens holder 210. The moving part 200 may comprise the lens holder 210. The lens holder 210 may be a carrier. The lens holder 210 may be disposed in the housing 110. The lens holder 210 may be disposed on the housing 110. The lens holder 210 may be disposed within the housing 110. The lens holder 210 may be movably disposed in the housing 110. The lens holder 210 may be movable relative to the housing 110. The lens holder 210 may be movable in the optical axis direction. The lens holder 210 may be coupled to a lens. The lens holder 210 may be movable integrally with the lens.

The lens holder 210 may comprise a side wall. The lens holder 210 may comprise a plurality of side walls. The lens holder 210 may comprise four side walls. The lens holder 210 may comprise first to fourth side walls.

The lens holder 210 may comprise a first side wall 211. A magnet 310 may be disposed on the first side wall 211. The magnet 310 may be disposed on the outer surface of the first side wall 211. A ball 400 may be disposed on the first side wall 211. A ball 400 may be disposed on the inner surface of the first side wall 211.

The lens holder 210 may comprise a groove 211-1. The groove 211-1 may be a magnet accommodation groove. The groove 211-1 may be formed recessed in the outer surface of the first side wall 211 of the lens holder 210. A magnet 310 may be disposed in the groove 211-1. At least a portion of the magnet 310 may be accommodated in the groove 211-1.

The lens holder 210 may comprise a groove 211-2. The groove 211-2 may be a ball accommodation groove. The groove 211-2 may be formed recessed in the inner surface of the first side wall 211 of the lens holder 210. A ball 400 may be disposed in the groove 211-2. At least a portion of the ball 400 may be accommodated in the groove 211-2.

Hereinafter, one of the 'groove 211-1' and the 'groove 211-2' may be referred to as the 'first groove' and the other may be referred to as the 'second groove'.

The lens holder 210 may comprise an upper stopper 212. The upper stopper 212 may be formed on the upper surface of the lens holder 210. The upper stopper 212 may be formed on the upper surface of the first side wall 211. The upper stopper 212 may form the upper end of the lens holder 210. The upper stopper 212 may come into contact with the upper plate 121 of the cover member 120 when the lens holder 210 moves upward. In other words, the upper stopper 212 may restrict the upward movement of the lens holder 210. The upper stopper 212 may comprise a protrusion.

The lens holder 210 may comprise a lower stopper 213. The lower stopper 213 may be formed on the lower surface of the lens holder 210. The lower stopper 213 may be formed on the lower surface of the first side wall 211. The lower stopper 213 may form the lower end of the lens holder 210. The lower stopper 213 may contact the housing 110 when the lens holder 210 moves downward. In other words, the downward movement of the lens holder 210 may be restricted by the lower stopper 213. The lower stopper 213 may comprise a protrusion.

The lens driving device 10 may comprise a driving part 300. The driving part 300 may move the moving part 200 relative to the fixed part 100. The driving part 300 can move the moving part 200 when power is applied. The driving part 300 can comprise a magnet 310 and a coil 320. The driving part 300 can move the moving part 200 through electromagnetic interaction. The magnet 310 and the coil 320 can move the lens holder 210 with respect to the housing 110. The magnet 310 and the coil 320 can move the lens holder 210 in the optical axis direction.

The lens driving device 10 can comprise a magnet 310. The driving part 300 can comprise a magnet 310. The magnet 310 can be disposed on the lens holder 210. The magnet 310 can be disposed on the lens holder 210. The magnet 310 can be fixed to the lens holder 210. The magnet 310 can be coupled to the lens holder 210. The magnet 310 can be bonded to the lens holder 210 with an adhesive.

The magnet 310 can be positioned corresponding to the coil 320. The magnet 310 can overlap the coil 320 in a direction perpendicular to the optical axis. The magnet 310 can overlap the coil 320 in the x-axis direction. The magnet 310 can be disposed to face the coil 320. The magnet 310 can face the coil 320. The magnet 310 can interact with the coil 320. The magnet 310 can electromagnetically interact with the coil 320. The magnet 310 can move when current is applied to the coil 320. The magnet 310 can move integrally with the lens holder 210.

The magnet 310 may be a four-pole magnetized magnet. The magnet 310 may comprise a first magnet part comprising a north pole and a south pole, a second magnet part disposed on the first magnet part and comprising a south pole and a north pole, and a neutral section disposed between the first magnet part and the second magnet part. The magnet 310 may be disposed in the optical axis direction.

As a modified example, the magnet 310 may be a two-pole magnetized magnet. For example, the upper area of the magnet 310 may be a north pole and the lower area may be a south pole.

The magnet 310 may be disposed so that it exerts an attractive force on the yoke 500. The ball 400 may be pressed between the lens holder 210 and the housing 110 by the force that causes the magnet 310 to move toward the yoke 500. This allows the ball 400 to remain in close contact with the lens holder 210 and the housing 110.

The magnet 310 may be disposed between the yoke 500 and the coil 320 in a direction perpendicular to the optical axis. At least a portion of the magnet 310 may be disposed between the yoke 500 and the coil 320 in a direction perpendicular to the optical axis. The magnet 310 may overlap the yoke 500 and the coil 320 in a direction perpendicular to the optical axis.

The lens driving device 10 may comprise the coil 320. The driving part 300 may comprise the coil 320. The coil 320 may be disposed on the substrate 130. The coil 320 may be disposed on the substrate 130. The coil 320 may be fixed to the substrate 130. The coil 320 may be coupled to the substrate 130. The coil 320 may be soldered to the substrate 130. The coil 320 may be disposed in the housing 110. The coil 320 may be disposed on the housing 110. The coil 320 may be fixed to the housing 110. The coil 320 may be disposed on the side plate 122 of the cover member 120. The coil 320 may be disposed on the side plate 122 of the cover member 120.

The coil 320 can interact with the magnet 310. The coil 320 can be disposed to face the magnet 310. The coil 320 can face the magnet 310. The coil 320 can be disposed at a corresponding position to the magnet 310. The coil 320 can overlap the magnet 310 in a direction perpendicular to the optical axis. The coil 320 can overlap the magnet 310 in the x-axis direction. The coil 320 can move the magnet 310. The coil 320 can move the lens holder 210. The coil 320 can move the lens.

When current is applied to the coil 320, the magnet 310 can move. When a forward current is applied to the coil 320, the magnet 310 can move upward. When a reverse current is applied to the coil 320, the magnet 310 can move downward. However, conversely, when a reverse current is applied to the coil 320, the magnet 310 can move upward, and when a forward current is applied to the coil 320, the magnet 310 can move downward.

The lens driving device 10 may comprise a sensor 330. The driving part 300 may comprise the sensor 330. The sensor 330 may be disposed in the substrate 130. The sensor 330 may be disposed on the substrate 130. The sensor 330 may be coupled to the substrate 130. The sensor 330 may be soldered to the substrate 130.

The sensor 330 can detect the magnet 310. The sensor 330 can detect the magnetic force of the magnet 310. The sensor 330 may be a Hall sensor. The sensor 330 can detect the position or movement of the magnet 310. Through this, the sensor 330 can detect the position or movement of the lens holder 210. The sensor 330 can detect the lens holder 210. The position of the magnet 310 detected by the sensor 330 can be used for autofocus feedback control.

The lens driving device 10 may comprise a guide part. The guide part can guide the movement of the moving part 200 relative to the fixed part 100. The guide part can guide the movement of the moving part 200 in the optical axis direction.

The lens driving device 10 may comprise a ball 400. The guide part may comprise the ball 400. The ball 400 may be formed of ceramic. The ball 400 may be a ceramic ball. The ball 400 may be formed in a spherical shape. The ball 400 may comprise a curved surface.

The ball 400 may be disposed in the housing 110. The ball 400 may be disposed on the housing 110. The ball 400 may be in contact with the housing 110. The ball 400 may be disposed in the groove 113-1 of the housing 110. The ball 400 may be disposed on the groove 113-1 of the housing 110. The ball 400 may be in contact with the groove 113-1 of the housing 110.

The ball 400 may be disposed in the lens holder 210. The ball 400 may be disposed on the lens holder 210. The ball 400 may be in contact with the lens holder 210. The ball 400 may be disposed in the groove 211-2 of the lens holder 210. The ball 400 may be disposed on the groove 211-2 of the lens holder 210. The ball 400 may be in contact with the groove 211-2 of the lens holder 210.

The ball 400 may be disposed between the housing 110 and the lens holder 210. The ball 400 may be disposed between the groove 113-1 of the housing 110 and the groove 211-2 of the lens holder 210. The ball 400 may be positioned between the housing 110 and the lens holder 210 in a first direction perpendicular to the optical axis direction. The ball 400 may be disposed between the lens holder 210 and the housing 110 in a direction in which the magnet 310 faces the yoke 500.

The ball 400 may be moved in a manner of rolling in the optical axis direction. The ball 400 may move together with the lens holder 210 when the lens holder 210 moves. The ball 400 may limit the movement of the lens holder 210 to the optical axis direction. The lens holder 210 may be limited by the ball 400 from moving in any direction other than the optical axis direction. The ball 400 may guide the movement of the lens holder 210 in the optical axis direction. The ball 400 may rotate in place when the lens holder 210 moves.

The magnet 310 may comprise an outer surface facing the coil 320 and an inner surface opposite the outer surface. The shortest distance between the ball 400 and the inner surface of the magnet 310 may be shorter than the shortest distance between the ball 400 and the outer surface of the magnet 310. In other words, the ball 400 may be disposed closer to the inner surface than to the outer surface of the magnet 310.

The shortest distance between the ball 400 and the yoke 500 may be shorter than the shortest distance between the ball 400 and the magnet 310. In other words, the ball 400 may be disposed closer to the yoke 500 than to the magnet 310. In the present embodiment, the ball 400 may be disposed on the inner side compared to the comparative example. At this time, in the comparative example, the ball 400 may be disposed on the outer surface of the lens holder 210. In the present embodiment, since the ball 400 is disposed further inward compared to the comparative example, even if a moment occurs in the lens holder 210 with respect to the ball 400, the effect thereof may be reduced compared to the comparative example.

The ball 400 may comprise a plurality of balls. The ball 400 may comprise a plurality of balls that overlap in the optical axis direction. The ball 400 may comprise a first ball 401 and a fourth ball 404 that overlap each other in the optical axis direction. The ball 400 may comprise a second ball 402 and a third ball 403 that are disposed between the first ball 401 and the fourth ball 404 and have a smaller diameter than the first ball 401 and the fourth ball 404. However, the second ball 402 and the third ball 403 only maintain the distance between the first ball 401 and the fourth ball 404 and do not guide the movement of the lens holder 210, so they may be understood as separate components from the ball 400. Alternatively, the second ball 402 and the third ball 403 may also assist the movement of the lens holder 210. The second ball 402 and the third ball 403 may be spaced apart from the housing 110. The second ball 402 and the third ball 403 may be spaced apart from the lens holder 210.

The second ball 402 and the third ball 403 may maintain a gap between the first ball 401 and the fourth ball 404. The diameters of each of the second ball 402 and the third ball 403 may be smaller than the diameters of each of the first ball 401 and the fourth ball 404. The first ball 401 and the fourth ball 404 may be main balls, and the second ball 402 and the third ball 403 may be support balls. The support balls may be used to secure space for the main ball. However, the support balls may also participate in the rolling of the moving part 200.

The lens driving device 10 may comprise a ball pressure member. The ball pressurizing member can pressurize the ball so that the ball remains in contact with the ball. The ball pressurizing member can comprise a magnet and a yoke that exert an attractive force on each other.

The lens driving device 10 may comprise a yoke 500. The ball pressurizing member may comprise the yoke 500. The yoke 500 may be disposed in the housing 110. The yoke 500 may be disposed on the housing 110. The yoke 500 may be fixed to the housing 110. The yoke 500 may be coupled to the housing 110. The yoke 500 may be bonded to the housing 110 with an adhesive. The yoke 500 may be disposed in the support part 113 of the housing. The yoke 500 may be disposed in a groove formed in the support part 113 of the housing 110.

The yoke 500 may be subject to an attractive force with a magnet 310. A force may be applied to the magnet 310 to move it toward the yoke 500. The attractive force between the magnet 310 and the yoke 500 may cause the lens holder 210 to press the ball 400 toward the housing 110.

The shortest distance between the yoke 500 and the optical axis may be shorter than the shortest distance between the magnet 310 and the optical axis. In other words, the yoke 500 may be positioned closer to the optical axis than the magnet 310. The yoke 500 may be positioned inward relative to the magnet 310. As a result, a force may be applied to the magnet 310 to move it inward, i.e., in the direction of the optical axis.

The magnet 310 may comprise an outer surface facing the coil 320. The ball 400 may overlap the yoke 500 in a first direction that is perpendicular to the optical axis and parallel to the outer surface of the magnet 310. The ball 400 may overlap the coil 320 in a second direction that is perpendicular to the optical axis and perpendicular to the outer surface of the magnet 310. The first and second directions may be perpendicular.

The magnet 310 may comprise a first portion that overlaps the ball 400 in the first direction and a second portion that does not overlap the ball 400 in the first direction. When viewed from above, the magnet 310 may comprise a first portion that overlaps the ball 400 in the first direction and a second portion that does not overlap the ball 400 in the first direction. However, as a modified example, the entire portion of the magnet 310 may overlap the ball 400 when viewed from above. Alternatively, in another modified example, not all portions of the magnet 310 may overlap the ball 400 when viewed from above.

The yoke 500 may comprise a plurality of yokes. The yoke 500 may comprise two yokes. The yoke 500 may comprise two yokes of corresponding shapes. The yoke 500 may comprise two yokes of the same shape. The two yokes may be disposed symmetrically with respect to an imaginary plane containing the optical axis.

The yoke 500 may comprise a first yoke 501 and a second yoke 502 that are spaced apart from each other. The first yoke 501 may comprise a first portion 500-1 and a second portion 500-2 that protrudes inwardly from the first portion 500-1. The second portion 500-2 of the first yoke 501 may protrude in a direction from the first portion 500-1 toward the second yoke 502. The second yoke 502 may comprise a first portion 500-1 and a second portion 500-2 that protrudes inwardly from the first portion 500-1. The second portion 500-2 of the second yoke 502 may protrude in a direction from the first portion 500-1 toward the first yoke 501. In the optical axis direction, the length of the first portion 500-1 may be longer than the length of the second portion 500-2.

In this embodiment, the process sequence for assembling the lens driving device 10 may be roughly as follows. First, the housing 110, the substrate 130, and the yoke 500 may be assembled to form a housing assembly. Next, the lens holder 210 and the magnet 310 may be assembled to form a lens holder assembly. Subsequently, the housing assembly and the lens holder assembly may be assembled, and the cover member may be assembled.

In this embodiment, the return force acting on the magnet 310 may be minimized through the rotated T-shaped structure of the yoke 500. At this time, the return force may be a force that causes the magnet 310 to return to the original position thereof. In this embodiment, the force that causes the magnet 310 to return to the initial position thereof may be zero or close to zero. Through this, the amount of current consumed to drive the moving part 200 in this embodiment can be minimized. In other words, in this embodiment, the current consumption generated during AF driving can be reduced compared to the first modified example.

Hereinafter, the configuration of the lens driving device according to the first modified example will be described with reference to the drawings.

FIG. 13 (a) is a cross-sectional view illustrating the initial state of the lens driving device according to the first modified example, in which no current is applied to the coil, and (b) is a perspective view illustrating the disposition structure of the drive part and the yoke.

In the first modified example, the yoke 500a may be a square plate shape, as illustrated in (b) of FIG. 13. The yoke 500a may be disposed parallel to the optical axis. In the first modified example, a return force may be generated between the magnet 310 and the yoke 500a. A continuous force may be applied to the magnet 310 in a direction such that the center of the magnet 310 and the center of the yoke 500a align.

Hereinafter, the configuration of a lens driving device according to the second modified example will be described with reference to the drawings.

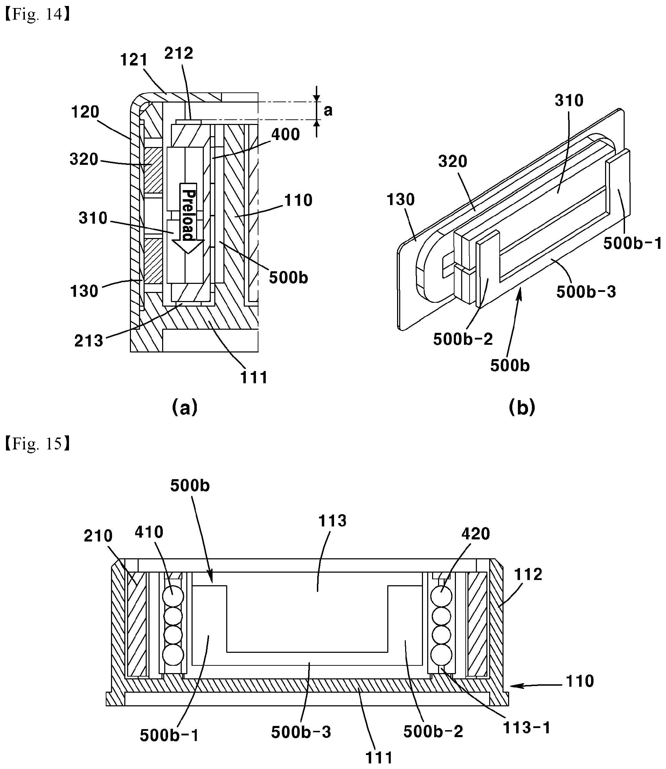

FIG. 14 (a) is a cross-sectional view illustrating the initial state of the lens driving device according to the second modified example, in which no current is applied to the coil, and (b) is a perspective view illustrating the disposition structure of the drive part and the yoke. FIG. 15 is a cross-sectional view illustrating the disposition of the ball and the yoke in the housing of the lens driving device according to the second modified example.

In the second modified example, the yoke 500b may comprise a first portion 500b-1 and a second portion 500b-2 disposed to be long in the optical axis, and a third portion 500b-3 connecting the lower end portion of the first portion 500b-1 and the lower end portion of the second portion 500b-2. The upper end portion of the first portion 500b-1 and the upper end portion of the second portion 500b-2 may not be connected to each other.

In the second modified example, the third portion 500b-3 may overlap the magnet 310 in a direction perpendicular to the optical axis when the moving portion 200 is disposed at the lowermost end.

In the second modified example, a pre-load may be applied to the magnet 310 by the attractive force between the magnet 310 and the yoke 500b, particularly by the attractive force between the magnet 310 and the third portion 500b-3 of the yoke 500b. At this time, the pre-load may be a force that moves the magnet 310 from an initial position where no current is applied to the coil 320 to a specific position. In the second modified example, the magnet 310 may be moved by the attractive force with the third portion 500b-3 of the yoke 500b from an initial position where no current is applied to the coil 320 so that the lens holder 210 comes into contact with the lower plate 111 of the housing 110. In other words, in the second modified example, the lens holder 210 can be maintained in contact with the lower plate 111 of the housing 110 at the initial position where no current is applied to the coil 320. Therefore, even when an external force is generated in the initial state, noise generated by the lens holder 210 hitting the housing 110 or the cover member 120 can be prevented. In other words, the second modified example can be an improved structure in terms of preventing impact noise compared to the first modified example.

Hereinafter, the auto focus operation of the lens driving device according to the present embodiment will be described with reference to the drawings.

FIG. 12 (a) is a cross-sectional view illustrating the initial state of the lens driving device according to the present embodiment, in which no current is applied to the coil, and (b) is a perspective view illustrating the disposition structure of the drive part and the yoke.

When current is applied to the coil 320, an electromagnetic field is formed around the coil 320, so that the coil 320 and the magnet 310 can electromagnetically interact. At this time, since the coil 320 is fixed to the substrate 130 and the housing 110, the magnet 310 can move. The magnet 310 can move together with the lens holder 210 and the lens. At this time, the ball 400 guides the movement of the lens holder 210 with respect to the housing 110 in the optical axis direction, so that the lens holder 210 and the lens can move in the optical axis direction (see OA of FIG. 4). Through this, the lens can move in the optical axis direction with respect to the image sensor 60.

More specifically, when a forward current is applied to the coil 320, the magnet 310 can move upward in the optical axis direction due to the interaction between the coil 320 and the magnet 310. Through this, the lens can move away from the image sensor 60. In the initial position where no current is applied to the coil 320, an upper stroke space (see a of (a) of FIG. 12) can be formed between the upper stopper 212 of the lens holder 210 and the upper plate 121 of the cover member 120. When a forward current is applied to the coil 320, the lens holder 210 can move within the upper stroke space.

In addition, when a reverse current is applied to the coil 320, the magnet 310 can move downward in the optical axis direction due to the interaction between the coil 320 and the magnet 310. Through this, the lens can come closer to the image sensor 60. In the initial position where no current is applied to the coil 320, a lower stroke space (see b of (a) of FIG. 12) can be formed between the lower stopper 213 of the lens holder 210 and the lower plate 111 of the housing 110. When a reverse current is applied to the coil 320, the lens holder 210 can move within the lower stroke space.

In this way, by applying a forward or reverse current to the coil 320, the image of the subject formed on the image sensor 60 can be adjusted to be clear. In other words, autofocus operation can be performed.

Furthermore, the sensor 330 can detect the magnetic field of the magnet 310 in real time to detect the positions of the magnet 310, the lens holder 210, and the lens. Feedback control can be performed to move the lens to a more accurate position based on the position of the lens detected by the sensor 330. In the present embodiment, more precise autofocus operation can be performed through autofocus feedback control.

In the present embodiment and the first modified example, the pre-load that guides the initial position of the magnet 310 between the yoke 500, 500a and the magnet 310 may not be applied or may be weak. Therefore, autofocus operation can be operated in the first modified example in the same manner as in the present embodiment. The autofocus operation of the lens driving device according to the first modified example can be analogously applied to the description of the autofocus operation of the lens driving device according to the present embodiment.

However, in the second modified example, a pre-load may act between the yoke 500b and the magnet 310 to guide the initial position of the magnet 310. Accordingly, the lens holder 210 may be in contact with the lower plate 111 of the housing 110 at the initial position when no current is applied to the coil 320. In this case, at the initial position when no current is applied to the coil 320, only an upper stroke space (see a of (a) of FIG. 14) may be formed between the upper stopper 212 of the lens holder 210 and the upper plate 121 of the cover member 120, and no lower stroke space may be formed.

In the second modified example, when a forward current is applied to the coil 320, the magnet 310 may move upward in the optical axis direction due to the interaction between the coil 320 and the magnet 310. Through this, the lens can be moved away from the image sensor 60. When a forward current is applied to the coil 320, the lens holder 210 can move within the upper stroke space (see a in (a) of FIG. 14).

The following describes the configuration of the camera device according to the present embodiment with reference to the drawings.

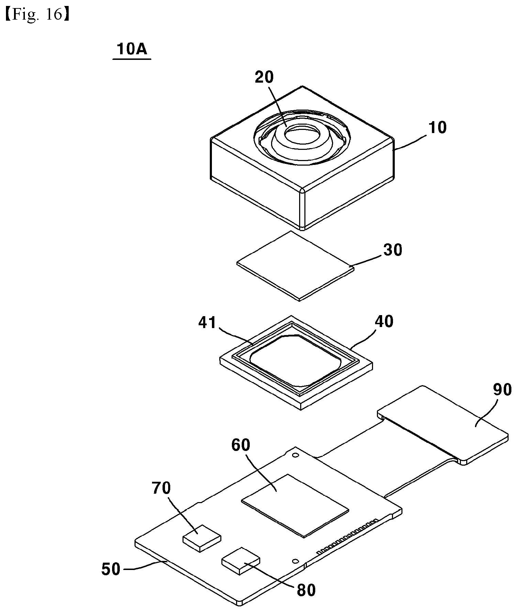

FIG. 16 is an exploded perspective view illustrating a camera device according to the present embodiment.

The camera device 10A may comprise a lens driving device 10. The lens driving device 10 may be a voice coil motor (VCM). The lens driving device 10 may be a lens driving motor. The lens driving device 10 may be a lens driving actuator. The lens driving device 10 may comprise an AF module. As a modified example, the lens driving device 10 may comprise an OIS module. The lens driving device 10 may be a device that drives a lens. As illustrated in the drawing, the lens driving device 10 may comprise a lens. However, the lens may be understood as a separate component from the lens driving device 10 as a component of the camera device 10A.

The camera device 10A may comprise a lens module 20. The lens module 20 may be disposed on the image sensor 60. The lens module 20 can be coupled to the lens driving device 10. The lens module 20 can be coupled to the lens holder 210 of the lens driving device 10. The lens module 20 can be moved integrally with the lens holder 210. The lens module 20 can be movably disposed relative to the image sensor 60. The lens module 20 can move in the optical axis direction relative to the image sensor 60.

The lens module 20 can comprise a lens. The lens can comprise a plurality of lenses. The lens module 20 can comprise a barrel. The plurality of lenses can be disposed within the barrel. The plurality of lenses can be coupled to the inner peripheral surface of the barrel. The plurality of lenses can be disposed in a stacked manner within the barrel.

The camera device 10A can comprise a filter 30. The filter 30 may block light of a specific frequency band from passing through the lens module 20 from being incident on the image sensor 60. The filter 30 may be disposed parallel to the x-y plane. The filter 30 may be disposed between the lens module 20 and the image sensor 60. The filter 30 may be disposed on the sensor base 40. Alternatively, the filter 30 may be disposed on the housing 110 of the lens driving device 10. The filter 30 may comprise an infrared filter. The infrared filter may block light in the infrared area from being incident on the image sensor 60.

The camera device 10A may comprise a sensor base 40. The sensor base 40 may be disposed between the lens driving device 10 and the printed circuit board 50. The sensor base 40 may comprise a protrusion part 41 on the inside of which a filter 30 is disposed. An opening may be formed in the portion of the sensor base 40 where the filter 30 is disposed so that light passing through the filter 30 may be incident on the image sensor 60. The adhesive member may couple or adhere the housing 110 of the lens driving device 10 to the sensor base 40. The adhesive member may additionally serve to prevent foreign substances from entering the interior of the lens driving device 10. The adhesive member may comprise at least one of epoxy, a thermosetting adhesive, and an ultraviolet-curable adhesive.

The camera device 10A may comprise a printed circuit board (PCB) 50. The printed circuit board 50 may be a substrate or a circuit board. A lens driving device 10 may be disposed on the printed circuit board 50. A sensor base 40 may be disposed between the printed circuit board 50 and the lens driving device 10. The printed circuit board 50 may be electrically connected to the lens driving device 10. An image sensor 60 may be disposed on the printed circuit board 50. Various circuits, components, control parts, or the like may be provided on the printed circuit board 50 to convert an image formed on the image sensor 60 into an electrical signal and transmit it to an external device.

The camera device 10A may comprise an image sensor 60. The image sensor 60 may be configured to form an image by incident light passing through a lens and a filter 30. The image sensor 60 may be mounted on a printed circuit board 50. The image sensor 60 may be electrically connected to the printed circuit board 50. For example, the image sensor 60 may be coupled to the printed circuit board 50 using surface mounting technology (SMT). As another example, the image sensor 60 may be coupled to the printed circuit board 50 using flip chip technology. The image sensor 60 may be disposed such that its optical axis is aligned with that of the lens. In other words, the optical axis of the image sensor 60 and the optical axis of the lens may be aligned. The image sensor 60 may convert light irradiated to an effective image area of the image sensor 60 into an electrical signal. The image sensor 60 may be any one of a charge-coupled device (CCD), a metal oxide semiconductor (MOS), a CPD, and a CID.

The camera device 10A may comprise a motion sensor 70. The motion sensor 70 may be mounted on a printed circuit board 50. The motion sensor 70 may be electrically connected to a control part 80 through a circuit pattern provided on the printed circuit board 50. The motion sensor 70 may output rotational angular velocity information due to the movement of the camera device 10A. The motion sensor 70 may comprise a twoaxis or three-axis gyro sensor or an angular velocity sensor.

The camera device 10A may comprise a control part 80. The control part 80 may be disposed on the printed circuit board 50. The control part 80 can be electrically connected to the coil 320 of the lens driving device 10. The control part 80 can individually control the direction, intensity, amplitude, or the like of the current supplied to the coil 320. The control part 80 can control the lens driving device 10 to perform an auto focus function and/or a shake correction function. Furthermore, the control part 80 can perform auto focus feedback control and/or shake correction feedback control for the lens driving device 10.

The camera device 10A may comprise a connector 90. The connector 90 may be electrically connected to a printed circuit board 50. The connector 90 may comprise a port for electrical connection with an external device.

The following describes the configuration of an optical device according to the present embodiment with reference to the drawings.

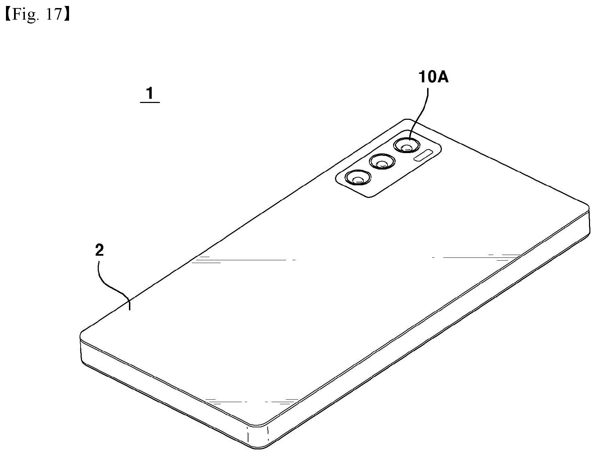

FIG. 17 is a perspective view illustrating an optical device according to the present embodiment.

The optical device 1 may comprise one or more of a mobile phone, a cellular phone, a portable terminal, a mobile terminal, a smart phone, a smart pad, a portable smart device, a digital camera, a laptop computer, a digital broadcasting terminal, a Personal Digital Assistant (PDA), a Portable Multimedia Player (PMP), and a navigation device. The optical device 1 may comprise any device for capturing images or photographs.

The optical device 1 may comprise a main body 2. The optical device 1 may comprise a camera device 10A. A camera device 10A may be disposed on the main body 2. The camera device 10A may capture a subject. The optical device 1 may comprise a display. The display may be disposed on the main body 2. The display may output one or more of the video and image captured by the camera device 10A. The display may be disposed on the first surface of the main body 2. The camera device 10A may be disposed on one or more of the first surface of the main body 2 and the second surface opposite the first surface. The camera device 10A may have a triple camera disposed vertically. Alternatively, the camera device 10A may have a triple camera disposed horizontally.

Although the embodiments of the present disclosure have been described with reference to the attached drawings, those skilled in the art will appreciate that the present disclosure can be implemented in other specific forms without altering the technical concept or essential features thereof. Therefore, the embodiments described above should be understood to be illustrative in all respects and not restrictive.

## Claims

1. A lens driving device comprising:
a housing;
a lens holder disposed on the housing;
a magnet disposed on the lens holder;
a coil interacting with the magnet;
a ball disposed between the housing and the lens holder; and
a yoke disposed on the housing and having an attractive force with the magnet,
wherein a shortest distance between the yoke and an optical axis is shorter than a shortest distance between the magnet and the optical axis.

2. The lens driving device of claim 1, wherein the lens holder is configured to press the ball toward the housing by the attractive force between the magnet and the yoke.

3. The lens driving device of claim 1, wherein the magnet comprises an outer lateral surface facing the coil and an inner lateral surface opposite the outer lateral surface, and
wherein a shortest distance between the ball and the inner lateral surface of the magnet is shorter than a shortest distance between the ball and the outer lateral surface of the magnet.

4. The lens driving device of claim 1, wherein a shortest distance between the ball and the yoke is shorter than a shortest distance between the ball and the magnet.

5. The lens driving device of claim 1, wherein the magnet comprises an outer lateral surface facing the coil, and
wherein the ball overlaps the yoke in a first direction perpendicular to the optical axis and parallel to the outer lateral surface of the magnet.

6. The lens driving device of claim 5, wherein the magnet comprises a first portion overlapping the ball in the first direction and a second portion not overlapping the ball in the first direction.

7. The lens driving device of claim 1, wherein the magnet comprises an outer lateral surface facing the coil, and
wherein the ball overlaps the coil in a second direction perpendicular to the optical axis and perpendicular to the outer lateral surface of the magnet.

8. The lens driving device of claim 1, wherein the magnet is disposed between the yoke and the coil in a direction perpendicular to the optical axis.

9. The lens driving device of claim 1, wherein the magnet and the coil are configured to move the lens holder in an optical axis direction, and
wherein the ball comprises a plurality of balls overlapping each other in the optical axis direction.

10. The lens driving device of claim 1, wherein the lens holder comprises a first side wall, and
wherein the lens holder comprises a first groove formed recessed on an outer surface of the first side wall and in which the magnet is disposed, and a second groove formed recessed on an inner surface of the first side wall and in which the ball is disposed.
